# EUROPÄISCHE PATENTSCHRIFT

(11) **EP 1 656 289 B1**
(45) Veröffentlichungstag und Bekanntmachung des Hinweises auf die Patenterteilung: **07.11.2007**
(21) Anmeldenummer: 04763962.0
(22) Anmeldetag: 10.08.2004
(51) Int. Cl.: B60R 25/04

(54) **VERFAHREN ZUR SICHERUNG EINES FAHRZEUGES GEGEN DIEBSTAHL**
METHOD FOR SECURING A VEHICLE AGAINST THEFT
PROCEDE DE SECURISATION D'UN VEHICULE CONTRE LE VOL

(30) Priorität: 13.08.2003 DE 10337424; 26.09.2003 DE 10345129; 20.11.2003 DE 10354398; 15.06.2004 DE 102004028569
(43) Veröffentlichungstag der Anmeldung: 17.05.2006
(60) Teilanmeldung: 06026016.3
(73) Patentinhaber: Idas Informations- Daten- und Automationssysteme GmbH, 65549 Limburg/Lahn (DE)
(72) Erfinder: PUDELKO, Herbert, 61250 Usingen (DE); KÖHLER, Peter, 35781 Weilburg (DE)
(74) Vertreter: Vonnemann, Gerhard
(86) Internationale Anmeldenummer: PCT/EP2004/008946
(87) Internationale Veröffentlichungsnummer: WO 2005/019005

(56) Entgegenhaltungen:
- EP-A- 0 610 902
- EP-A- 0 637 528
- WO-A-00/48873
- WO-A-00/73106
- DE-C- 19 529 666
- US-A- 5 412 370
- US-A- 5 635 901
- US-B1- 6 195 648
- US-B1- 6 323 762

## Beschreibung

Die Erfindung betrifft ein Verfahren zur Sicherung eines Fahrzeuges gegen Diebstahl gemäß dem Oberbegriff des Anspruchs 1.

In der überwiegenden Anzahl der heutigen Automobile sind bereits Wegfahrsperren installiert, wie sie beispielsweise in der GB 2279479 A, DE 9414476 und der DE 19604206 beschrieben sind. Diese Art der Wegfahrsperren lässt sich jedoch beispielsweise bereits dadurch umgehen, dass der Unberechtigte das codierte Signal eines Transponders, der den Berechtigten ausweist, empfängt und später selbst entsprechend einsetzen kann, um sich zu identifizieren. Eine solche Wegfahrsperre ist deshalb leicht zu umgehen.

Ein weiteres Sicherheitsproblem ist das sogenannte "car-napping", bei dem die berechtigte Person zusammen mit dem Fahrzeug gewaltsam dazu gebracht wird, den Unberechtigten die Nutzung des Fahrzeugs zu ermöglichen.

Mit diesem Problem hat sich bereits die DE 4440975 beschäftigt, die eine Fremdnutzungs-Schutzeinrichtung für ein Kraftfahrzeug mit einer Nutzungssteuerungs-Einrichtüng vorsieht, wobei eine fahrzeugexterne Sendeeinheit ständig periodisch aufeinander folgende fahrzeugspezifische Nutzungssignale an die Nutzungs-Steuerungseinrichtung sendet, um die Nutzung des Fahrzeugs zu erlauben.

Diese Art der Sicherung weist aber weiterhin signifikante Nachteile auf. Beispielsweise ist die Einschaltung einer zusätzlichen Zertifizierungsstelle, wie beispielsweise der Polizei oder der Fahrzeughersteller notwendig, um einen sicheren Betrieb des Systems zu ermöglichen. Dadurch werden auch zusätzliche Kosten verursacht.

Weiterhin ist das System in den jeweiligen Nutzungszeiten und dem jeweiligen Nutzungsgebiet beschränkt bzw. nicht beliebig einstellbar und daher unflexibel.

Darüber hinaus ist es bei dieser Fremdnutzungs-Schutzeinrichtung möglich, durch "car-napping" von dem Berechtigten die Nutzungs-Steuerungseinrichtung, beispielsweise ein Mobiltelefon, gewaltsam in dessen Besitz zu bringen und dadurch das System zumindest zeitweise zu umgehen.

Eine gattungsgemäße Vorrichtung zur Sicherung eines Fahrzeugs gegen Diebstahl ist auch aus der EPO 610 902 A2 bekannt. Ferner ist ein Sicherungssystem für Automobile gegen Diebstahl aus der US 5,635,901 bekannt.

Aufgabe der Erfindung ist es daher, ein flexibles, auf das Sicherheitsbedürfnis der Fahrzeughalter anpassbares Verfahren vorzusehen, das dennoch eine extrem hohe Wirksamkeit gegen Diebstahl aufweisen.

Diese Aufgabe wird erfindungsgemäß durch ein Verfahren gelöst gemäß Anspruch 1, bei dem mindestens ein wesentliches Betriebselement des Fahrzeuges zwischen drei Betriebszuständen A, B und C schaltbar ist und gemäß den folgenden Schritten zwischen diesen Betriebszuständen geschalten wird:
a. Die wesentlichen Betriebselemente werden durch eine externe, von dem Fahrzeug unabhängige Nutzungsberechtigungseinrichtung über Mittel zur Übertragung der Berechtigungsinformation in einen im wesentlichen uneingeschränkt betriebsbereiten Betriebszustand A geschalten;
b. Mindestens ein wesentliches Betriebselement wird von einer ereignisabhängigen Schaltung durch mindestens ein Ereignis in einen für eine Zeitdauer betriebsbereiten Betriebszustand B geschalten, wobei die Zeitdauer von vordefinierten Betriebsparametern abhängig ist;
c. Entweder wird mindestens ein wesentliches Betriebselement des Fahrzeuges nach Ablauf der Zeitdauer zum Außer-Betrieb-Setzen des Fahrzeuges in einen nicht betriebsbereiten oder eingeschränkt betriebsbereiten Betriebszustand C geschalten oder die wesentlichen Betriebselemente werden vor Ablauf der Zeitdauer mittels der Nutzungsberechtigungseinrichtung über Mittel zur Übertragung der Berechtigungsinformation in den betriebsbereiten Betriebszustand A gemäß Verfahrensschritt a) geschalten.

Es ist vorgesehen, dass als Mittel zur Übertragung der Berechtigungsinformation von der Nutzungsberechtigungs-Einrichtung ein Fahrzeugschlüssel verwendet wird, durch den die Berechtigungsinformation, vorzugsweise verschlüsselt, zu einer Umschalteinrichtung übertragen wird, die im Falle der Berechtigung das wesentliche Betriebselement des Fahrzeugs in den Betriebszustand A umschaltet und dass anschließend die Berechtigungsinformation in dem Fahrzeugschlüssel gelöscht wird. Da sich die Nutzungsberechtigungs-Einrichtung außerhalb des Fahrzeugs befindet, kann ein Dieb, der nicht im Besitz dieser Nutzungsberechtigungs-Einrichtung ist, nach Ablauf der o.g. Zeitdauer das Fahrzeug nicht mehr in Betrieb setzen. Dadurch, dass die Berechtigungsinformation aus dem Fahrzeugschlüssel gelöscht wird, kann das Umschalten in den Betriebszustand A mit dem Fahrzeugschlüssel jeweils nur einmal erfolgen.

Im Rahmen der Erfindung ist auch vorgesehen, dass die Abschaltung des wesentlichen Betriebselements alternativ zur völligen Außerbetriebsetzung nur einen eingeschränkten Betrieb ermöglicht, d.h. es soll in gewissem Umfang ein Notbetrieb möglich sein. Beispielsweise können dabei Fahrerassistenzsysteme ausgeschaltet sein oder die Notblinkanlage eingeschaltet werden. Auch Bremsassistent, Abstandskontrolle, Tempomat etc. können je nach Kombination einen eingeschränkten Notbetrieb erlauben, z.B. wenn nach Abklemmen der Netzversorgung zum Zurücksetzen des Systems erst eine Überführungsfahrt aus dem Ausland ins Inland notwendig sein sollte.

Um nun das Fahrzeug während der Zeitdauer, in der das wesentliche Betriebselement in dem Betriebszustand B ist, wieder in den uneingeschränkt betriebsbereiten Betriebszustand zurückzuschalten, ist es erforderlich, dass der Fahrzeughalter sich an einer von dem Fahrzeug unabhängigen, externen Nutzungsberechtigungs-Einrichtung als Berechtigter verifiziert und diese Berechtigungsinformation an das Fahrzeug übertragen wird. Das Fahrzeug wird daraufhin wieder in den Betriebszustand A geschaltet.

Durch die Maßnahme, dass bei falscher Berechtigungsinformation mindestens ein wesentliches Betriebselement in den Betriebszustand C umgeschaltet wird, wird durch einen misslungenen Berechtigungsversuch des Diebs das Fahrzeug sofort fahruntauglich, wodurch eine Wiederherstellung der Fahrtauglichkeit durch beispielsweise eine Zertifizierungsstelle oder den Fahrzeughersteller erfolgen muss.

Weiterhin ist in einer vorteilhaften Ausführungsform der Erfindung vorgesehen, dass das/die wesentliche(n) Betriebselement(e) nach Ablauf der Zeitdauer selbständig in den Betriebszustand C geschaltet werden. Durch diese Maßnahme wird ein Umgehen der Vorrichtung oder des Verfahrens zur Sicherung des Fahrzeugs gegen Diebstahl auch dann verhindert, wenn der Dieb das/die wesentlichen(n) Betriebselement(e) austauschen würde. Da beispielsweise ein Steuergerät als wesentliches Betriebselement in Frage kommt, ist dieser Austausch umständlich und teuer. Diebstahl wird dadurch unrentabel.

Weiterhin wird die Sicherheit des Verfahrens durch die Maßnahme erhöht, dass die Zeitdauer auf ein Maximum beschränkt wird, indem ein Zähler für die Zeitdauer eine maximale Stellenzahl aufweist. Dadurch kann selbst durch einen Eingriff in das wesentliche Betriebselement die Zeitdauer nicht auf einen beliebig hohen Wert gesetzt werden und müsste daher immer wieder neu manipuliert werden. Ein Verkauf an Dritte ist dadurch wirtschaftlich nicht vertretbar.

In einer weiteren Ausführungsform der Erfindung ist das Verfahren dadurch verbessert worden, dass sowohl das Fahrzeug als auch die Nutzungsberechtigungs-Einrichtung vor der ersten Inbetriebnahme durch einen Berechtigungscode einmal individualisiert werden. Durch diese Maßnahme wird auch ein Austausch mehrerer wesentlicher Betriebselemente des Fahrzeugs die Sicherheitsvorrichtung und das Sicherheitsverfahren nicht überwinden, da eine Berechtigungs-Information nur von dem zusammen mit der Nutzungsberechtigungs-Einrichtung verkauften und individualisierten Fahrzeug möglich ist. Dies kann z.B. durch Eingabe eines PIN-Codes, den nur der Fahrzeughalter kennt, und einen entsprechenden Verschlüsselungsalgorithmus erfolgen.

In einer weiteren Ausführungsform der Erfindung ist vorgesehen, dass die Betriebsparameter an der Nutzungsberechtigungs-Einrichtung eingestellt werden können. Die Zeitdauer, für welche das Fahrzeug im Betriebszustand B noch betrieben werden kann, hängt wesentlich von diesen Parametern ab. Der Nutzer kann auf diese Weise selbst entscheiden, wie lange er im Falle des Umschaltens von Betriebszustand A auf Betriebszustand B Zeit haben möchte, um eine Rückstellung in den Betriebszustand A durchführen zu können. Die sinnvollen Vorgaben des Werks können auf diese Weise an die Gewohnheiten oder Bedürfnisse jedes einzelnen Fahrzeughalters angepasst werden. Es ist auch denkbar, dass für verschiedene Benutzer Benutzerprofile in der Nutzungsberechtigungs-Einrichtung gespeichert sind, die wiederum mit verschiedenen Betriebsparametern hinterlegt sind. Solche Betriebsparameter können beispielsweise eine Zeitspanne, eine Kilometerentfernung, die Anzahl der Anlassvorgänge, die Häufigkeit des Öffnens der Türe oder die Häufigkeit des Einschaltens des Radios sein. Weitere messbare, immer wieder kehrende Betriebsparameter sind ebenfalls denkbar. Um zu gewährleisten, dass die Nutzungsberechtigungs-Einrichtung nur von berechtigten Personen genutzt wird, ist es in einer weiteren Ausgestaltung der Erfindung vorgesehen, dass die Nutzungsberechtigungs-Einrichtung Mittel zur Berechtigungsabfrage aufweist. Auf diese Art und Weise wird an der Nutzungsberechtigungs-Einrichtung sichergestellt, dass die Betriebsparameter nur von einer berechtigten Person geändert werden können und die Berechtigungsinformation an das Fahrzeug übertragen werden kann. Ein solches Mittel zur Berechtigungsabfrage kann beispielsweise eine biometrische Berechtigungsabfrage, eine Berechtigungsabfrage mittels Chipkarte oder mittels des Ersatzschlüssels und/oder Werkstattschlüssels sein, die an der Nutzungsberechtigungseinrichtung vorgesehen sind. Es sind natürlich weitere, dem Fachmann bekannte Berechtigungsabfragen, wie z.B. die Eingabe einer Zahlenkombination denkbar.

In einer weiteren verbesserten Ausführungsform der Erfindung ist vorgesehen, dass die Ereignisse, die die Umschaltung des Betriebszustands des wesentlichen Betriebselements des Fahrzeugs auslösen, von der Nutzungsberechtigungs-Einrichtung ausgewählt werden. Dies führt zu einer weiteren Individualisierung und Erschweren der Umgehung der Sicherheitseinrichtung durch einen Dieb. Der Fahrzeughalter kann bestimmen, welche Ereignisse das Umschalten des Betriebszustands A in den Betriebszustand B bewirken. Davon abhängig kann es wiederum sein, welches wesentliche Betriebselement außer Betrieb gesetzt wird, wenn die bestimmten Ereignisse mit einem bestimmten wesentlichen Betriebselement verknüpft sind und lediglich dieses in den Betriebszustand B versetzen. Dadurch kann auch je nach Art des Ereignisses, das das Umschalten auslöst, eine kleinere oder größere Zeitdauer für die Reaktivierung vorgegeben werden.

Das Mittel zum Erkennen eines Umschaltereignisses ist vorteilhaft ein im Fahrzeug angeordneter Betätigungsschalter Der Betätigungsschalter kann beispielsweise im Armaturenbrett des Fahrzeugs oder in der Fahrertür integriert sein. Dieser kann auch spontan im Falle eines Diebstahls in Form des immer moderner werdenden "car-nappings" noch direkt ausgelöst werden. Der Dieb kann zunächst das Auto fortbewegen und den Fahrzeughalter freilassen. Da die Immobilisierung des Fahrzeuges während der Fahrt eine Gefährdung anderer Verkehrsteilnehmer mit sich bringt, erfolgt die Sperrung des Fahrzeuges bei nächster Gelegenheit, beispielsweise beim nächsten Anlassvorgang.

Das Mittel zum Erkennen eines Umschaltereignisses kann einen Sensor für das Betätigen einer Öffnung des Fahrzeugs und einen Verriegelungssensor zum Erkennen des Verriegelungszustands des Fahrzeugs aufweisen. Bei der Öffnung kann es sich beispielsweise um die Tür, Motorhaube, Deckel oder Kofferraum des Fahrzeugs handeln. Ein Umschalten des Betriebszustands erfolgt jedoch lediglich in dem Fall, wenn das Fahrzeug verriegelt ist und dennoch eine Öffnung des Fahrzeugs erfolgt. Auch in diesem Fall ist es ratsam, die Zeitdauer des Umschaltens relativ kurz festzulegen.

Als weitere Mittel zum Erkennen eines Umschaltereignisses sind in vorteilhafter Ausgestaltung der Erfindung ein Innenraumüberwachungssensor, ein Sensor zur Erkennung des Anhebens des Fahrzeugs, oder eine Schaltung zur Erkennung der Wiederkehr der Spannung von einer Energiequelle des Fahrzeugs vorgesehen. Weiterhin ist ein Sensor zum Erkennen des Anschlusses von Diagnosemitteln an dafür vorgesehenen Steckern des Fahrzeugs vorgesehen. In noch einer weiteren Ausgestaltung der Erfindung ist vorgesehen, dass das Mittel zum Erkennen eines Umschaltereignisses einen Sensor zum Erkennen des Überdeckens oder auch des Entfernens des Kennzeichens des Fahrzeugs beinhaltet. Dieser Sensor kann als Kapazitäts-Messungssensor oder als Dickenmessungssensor ausgestaltet sein. Das Entfernen des Kennzeichens könnte über einen Näherungsschalter gelöst sein, der anspricht, sobald das Kennzeichen entfernt wird. Weiterhin kann als Ereignis ein gerufenes Wort dienen, wenn als Mittel zur Erkennung eines Umschaltereignisses Mittel zur Spracherkennung vorgesehen werden.

Die vorgenannten Mittel zum Erkennen eines Umschaltereignisses können sowohl einzeln als auch in Kombination eingesetzt werden, um ein Umschalten des Betriebszustands von Betriebszustand A nach Betriebszustand B auszulösen. Auch ist es möglich, die Mittel zur Erkennung des Umschaltereignisses jeweils einem bestimmten wesentlichen Betriebselement oder mehreren wesentlichen Betriebselementen des Fahrzeugs zuzuordnen. Um die Zuordnung für den Dieb nicht nachvollziehbar zu gestalten, ist es durch die vorliegende Erfindung möglich, die Zuordnung der Mittel zur Erkennung eines Umschaltereignisses zum Umschalten von bestimmten wesentlichen Betriebselementen des Fahrzeugs durch den Fahrzeughalter an der Nutzungsberechtigungs-Einrichtung einstellen zu lassen.

Da die meisten dieser Mittel zur Erkennung des Umschaltereignisses bereits in den Fahrzeugen vorhanden sind, brauchen die jeweiligen Sensoren nur noch mit der Umschalteinrichtung verbunden werden, um den Eintritt des Ereignisses an die Umschalteinrichtung zu übermitteln.

Als Mittel zum Erkennen eines Umschaltereignisses sind in einer weiteren vorteilhaften Ausführungsform Mittel zum Bestimmen der Position und eine Datenbank mit Gebieten erhöhter Diebstahlgefährdung vorgesehen, um beim Befahren eines solchen Gebietes ein Umschalten von dem Betriebszustand A in den Betriebszustand B auszulösen. Auf diese Art und Weise wird dem Benutzer die Entscheidung abgenommen, ob er die Sicherheit des Systems in besonders diebstahlgefährdeten Gebieten erhöht. Die Bedienung wird durch diese Maßnahme zudem wesentlich vereinfacht.

Weiter kann vorgesehen sein, dass mindestens eines der wesentlichen Betriebselemente über eine Wirkverbindung mit einem in einer Flüssigkeitsleitung eines wesentlichen Betriebsaggregates angeordneten Sperrventil verbunden ist, wobei das Sperrventil eine Codierung beinhaltet, die von dem wesentlichen Betriebselement über die Wirkverbindung verifizierbar ist. Durch ein solches Zusatzelement, das beispielsweise im Motorblock oder an anderen nur unter erhöhtem Aufwand zugänglichen Stellen angeordnet sein kann, wird das Fahrzeug noch besser vor Dieben geschützt, die beispielsweise eine oder mehrere der ansonsten mehr oder weniger zugänglichen wesentlichen Betriebselemente austauschen oder umgehen könnten. Ein Ausbau des Motorblocks macht einen solchen Diebstahl jedoch wirtschaftlich unrentabel.

Unter Betriebsaggregat sind der Motor und/oder das Getriebe zu verstehen.

Eine Alternative dazu besteht darin, dass der Motorblock selbst das wesentliche Betriebselement ist und damit auch keine Leitung zwischen dem wesentlichen Betriebselement und dem Motorblock erforderlich ist.

Um die Freischaltung flexibler zu gestalten, ist vorgesehen, dass die nicht beanspruchte Vorrichtung Mittel zur Übertragung der Berechtigungsinformation von der Nutzungsberechtigungseinrichtung zur Umschalteinrichtung aus größerer Entfernung aufweist. Durch diese Maßnahme ist es auch dann möglich, das Fahrzeug wieder in Betriebszustand A zu versetzen, wenn sich der rechtmäßige Besitzer weit von Zuhause und damit weit von der Nutzungsberechtigungseinrichtung befindet. Zur Sicherstellung dieser Mittel gegen Manipulation kann die Kommunikation auf einer üblichen Verschlüsselung basieren.

Zusätzlich kann vorgesehen sein, dass die Mittel zur Übertragung der Berechtigungsinformation mindestens eine Kommunikationseinrichtung, eine Eingabeeinrichtung und eine Ausgabeeinrichtung aufweist, die über einen Adapter die Berechtigungsinformation an die Umschalteinrichtung überträgt. Die Kommunikationseinrichtung kann eine Internetverbindung, eine eMail-Verbindung oder eine Telefonverbindung, insbesondere mobile Telefonverbindung sein, die die Verbindung zwischen dem Adapter und der Nutzungsberechtigungseinrichtung (3) herstellt. Hierzu kann beispielsweise ein Adapter eingesetzt werden, der den Fahrzeugschlüssel aufnimmt und diesen mit den passenden Parametern für die Betriebszustände B der wesentlichen Betriebselemente speist und darüber hinaus den richtigen, ggf. noch mit einem Algorithmus veränderten Code übermittelt.

Als Eingabeeinrichtung zur Bedienung kann eine Tastatur in Frage kommen. Eine weitere Möglichkeit besteht in der biometrischen Verschlüsselung des Zugangs zu dem Adapter.

Die Ausgabeeinrichtung übertragt die Informationen mittels eines Anschlusses an die Umschalteinrichtung. Der Anschluß kann an einem allgemeinen Anschluß des Fahrzeuges, beispielsweise USB, Infrarot oder Bluetooth erfolgen. Auch ist die verschlüsselte Übertragung über den Fahrzeugschlüssel möglich.

Weiterhin erleichtert der Adapter, dass die Nutzungsberchtigungseinrichtung als herkömmlicher PC - mit einem Anschluß wie oben genannt ausgerüstet - ausgebildet werden kann.

Um beispielsweise für Werkstätten oder Autovermietungen in vorteilhafter Weise eine noch sicherere Ausgestaltung des gattungsgemäßen Gegenstandes zu ermöglichen, ist gemäß einer nicht beanspruchten Variante vorgesehen, dass das/die wesentliche(n) Betriebselement(e) zwischen zwei Betriebszuständen B und C schaltbar ist/sind, wobei Betriebszustand B einen zeitlich durch Betriebsparameter P auf eine Zeitdauer Z beschränkten Betrieb des/der wesentlichen Betriebselemente(s) zulässt und Betriebszustand C die Sperrung des/der wesentlichen Betriebselemente(s) bewirkt, wobei die Umschalteinrichtung über mindestens eine Wirkverbindung mit jeweils mindestens einem Mittel zur Erkennung eines Umschaltereignisses verbunden ist. Diese Ausgestaltung der Erfindung ist besonders vorteilhaft in Kombination mit der Möglichkeit zur Übertragung der Berechtigungsinformation von der Nutzungsberechtigungseinrichtung zur Umschalteinrichtung aus größerer Entfernung. Dadurch kann eine sehr flexible Gestaltung der Vermietungen von Fahrzeugen stattfinden, die gleichzeitig eine gute Kontrolle der Fahrzeuge und eine Erhöhung des Schutzes gegen Diebstahl mit sich bringt. Durch die flexible Gestaltung der Parameter P, die eine Umschaltung von dem Betriebszustand B in den Betriebszustand C bewirken, kann so auf die speziellen Bedürfnisse und Vermietungszeiträume eingegangen werden.

In weiteren Ausgestaltungen können die Sicherheit von Codeschlüssel bzw. Codekarte weiter erhöht werden, wenn zusätzlich optische Merkmale vorgesehen sind, die für das individuelle Fahrzeug individuell sind, wie z.B. Fahrgestellnummer ggf. in verschlüsselter Form und oder Daten wie Tag und die Uhrzeit die angeben wann das Fahrzeug vom Band gefahren ist.

In die Codeschlüssel bzw. Codekarte können auch nicht optische Sicherungen wie Metallstreifen usw. eingebracht werden. Auch weitere optische Sicherungselemente, die nur unter UV Licht sichtbar sind, und/ oder Hologramme hinzugefügt werden.

Die Prüfung dieser Sicherungselemente erfolgt in allen jenen Geräten, die für bestimmte Vorgänge den Codeschlüssel bzw. die Codekarte benutzen müssen. Solche Geräte sind z.B. die Nutzungsberechtigungseinrichtung (NBE), und Geräte in der Werkstatt bzw. im Werk, die die Codekarte bzw. den Codeschlüssel zur Fahrtfreigabe und oder zum Anfertigen von Ersatzschlüsseln und oder zum Einspielen einer neuen Softwareversion benötigen.

Erst wenn die Prüfung der Sicherungselemente positiv verlaufen ist, werden Codeschlüssel bzw. Codekarte von den Geräten für die weiteren Prozesse akzeptiert.

D.h. die Anfertigung von Ersatzschlüsseln und oder das Einspielen von neuer Software in die Steuergeräte ist nur möglich, wenn der zum Fahrzeug passende Codeschlüssel bzw. die zum Fahrzeug passende Codekarte vorhanden und von den oben genannten Geräten akzeptiert ist.

Um die Steuergeräte vor einem unbefugten Einspielen neuer Software zu schützen, werden diese bei der ersten Inbetriebnahme mit dem "Abbild" des zu dem im Codeschlüssel bzw. in der Codekarte vorhandenen (individuellen Fahrzeugcodes) versehen. Dies wurde durch den Begriff "Individualisieren" bereits erwähnt.

Weiterhin kann das Werk ein Prüfgerät bereithalten damit weitere Prüfungen auf Echtheit des Codeschlüssels bzw. der Codekarte erfolgen können, um mögliche Kopien zu erkennen. Solche weiteren Prüfungen können sein Dicke, Gewicht und ggf. auch Materialbeschaffenheit und weitere dem Fachmann bekannte Echtheitsprüfungen sein. Dies kann so genutzt werden, dass der Besitzer nur dann Anspruch auf Leistungen aus der Diebstahlversicherung hat, wenn es die original Codekarte bzw. den original Codeschlüssel vorweisen kann.

In weiterer Ausgestaltung kann auch eine Anzahl von unterschiedlichen Kombinationen von Sicherungselementen, die bei Codeschlüssel bzw. Codekarte des gleichen Fahrzeugtyp benutzt werden, eingesetzt werden. Dabei wird für jedes einzelne Fahrzeug festgelegt, welche Sicherungselemente auf dem Codeschlüssel bzw. der Codekarte bei dem individuellen Fahrzeug zum Einsatz kommen und geprüft werden müssen, und welche nicht vorhanden sein dürfen.

Ein organisierter Diebstahl wird dann noch aufwändiger, da jetzt für jedes Fahrzeug individuell die Sicherheitskombination ermittelt und exakt kopiert werden muss.

Beim Werk hält sich der Aufwand für z.B. 10 oder 50 verschiedene Kombinationen von Sicherheitsmerkmalen dagegen in Grenzen, weil bei z.B. 500.000 verkauften Fahrzeugen pro Version immer noch 10.000 bzw. 50.000 Exemplare des gleichen Typs gefertigt werden können.

Eine organisierte Bande, die z.B. 500 Fahrzeuge entwendet, käme dagegen nur auf eine Stückzahl von 10 bzw. 50 pro Codekartenvariante. Die Kosten hierfür wären entsprechend hoch.

Mit dieser Methode soll verhindert - bzw. mit einem hohen Aufwand belegt - werden, dass ein Dieb ggf. unter Mithilfe des rechtmäßigen Besitzers Kopien anfertigt, um das Fahrzeug zu stehlen.

Die oben geschilderten Sicherungsmaßnahmen bewirken folgendes:

Um den Code aus Codekarte bzw. Codeschlüssel auszulesen, muß das Original zerstört werden, Der Dieb muß dann zwei Kopien vom Codeschüssel bzw. von der Codekarte anfertigen. Eine für das gestohlene Fahrzeug und einen für den rechtmäßigen Besitzer, weil dieser Codekarte bzw. Codeschlüssel bei der Versicherung vorweisen muß, um Leistungen aus der Diebstahlversicherung zu erhalten.

Mit der oben genannten Sicherungstechnik kann der Dieb aber für die Kopien von Codeschlüssel bzw. Codekarte keine preisgünstigen Rohlinge verwenden, er muss zum einen die Sicherungsmerkmale nachahmen und außerdem noch individuelle Fahrzeugdaten (s. oben) aufbringen. Damit wird der Aufwand für eine Kopie insbesondere sehr hoch und der mit dem Diebstahl beabsichtigte wirtschaftliche Nutzen wird erheblich oder ganz vernichtet.

In weiterer Ausgestaltung kann der Codeschlüssel bzw. die Codekarte so beschaffen sein, dass sie zwei Codes enthält. Der erste Code ist nur für die Kommunikation mit der Nutzungsberechtigungseinrichtung (NBE) nutzbar.

Der zweite Code ist für die Freigabefunktionen nutzbar.

Steckt man die Codekarte bzw. den Codeschlüssel nun in die NBE, so wird geprüft ob der erste Code zur NBE passt. Ist dies der Fall, so wird der Codeschlüssel bzw. die Codekarte mit dem zweiten Code geladen, der wie oben beschrieben für die Freigabe der Funktionen erforderlich ist. Dieser zweite Code wird jedoch nach einmaliger Verwendung automatisch gelöscht.

Dies hat den Vorteil, dass der rechtmäßige Besitzer auch Codeschlüssel bzw. Codekarte im Auto vergessen kann ohne, so dass dadurch bei einem Diebstahl der zweite Code (für die Funktionsfreigabe) in die Hände des Diebes fällt. Um an den zweiten Code zu gelangen, müßte der Dieb auch noch die beim Besitzer zu Hause befindliche NBE in seinen Besitz bringen.

Die Kombination aller dieser Varianten miteinander ergibt eine Vielzahl von Sicherheitsstufen.

Die Sicherheit kann vorteilhaft weiter erhöht werden, wenn Schlüssel und original Codekarte bzw. Codeschlüssel immer zusammen benutzt werden müssen, wenn ein Zugang zur Software möglich sein soll.

Zugang zu den Diagnosefunktionen, Reaktivierung der Software nach dem Abklemmen der Batterie d.h. immer dann wenn das Fahrzeug stromlos war, muss die Software wieder mit Hilfe von Schlüssel und Codekarte (bzw. Codeschlüssel) aktiviert werden.

Die Prüfung der Codekarte kann z.B. durch das Diagnosegerät in der Werkstatt und oder durch eine Zugangsberechtigungseinrichtung (ZBE) im Fahrzeug erfolgen.

Die Erfindung wird nachfolgend in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Figuren der Zeichnung zeigen im Einzelnen:
- Figur 1 -: ein Verfahrensschema des erfindungsgemäßen Verfahrens;
- Figur 2 -: eine schematische Darstellung einer nicht beanspruchten Ausführungsform
- Figur 3a und 3b -: eine schematische Darstellung von nicht beanspruchten Ausführungsformen der Nutzungsberechtigungseinrichtung
- Figur 4 -: eine schematische Darstellung der nicht beanspruchten Sicherungsmaßnahme mittels Sperrventil

Im Folgenden wird die in den Figuren dargestellte Ausführung der Erfindung beschrieben.

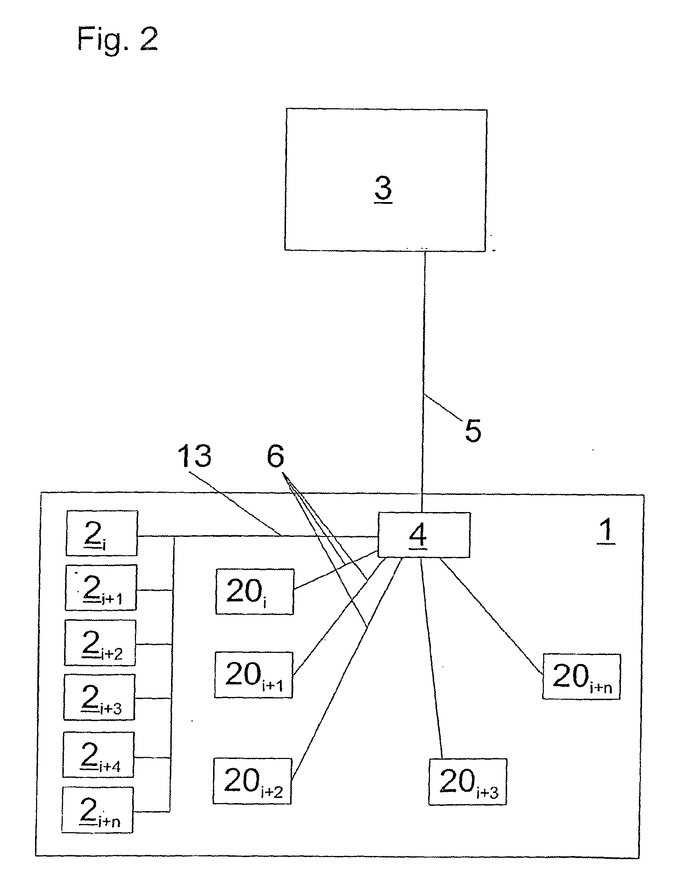

In Figur 2 ist unten ein Fahrzeug 1 schematisch dargestellt, das mit dem erfindungsgemäßen Verfahren davor geschützt werden soll, gestohlen zu werden. Mindestens ein wesentliches Betriebselement 2ᵢ des Fahrzeugs 1, bei welchem es sich beispielsweise um ein Steuergerät des Fahrzeugs 1 handelt, ist über mindestens eine Wirkverbindung 13 mit einer Umschalteinrichtung 4 verbunden. Diese Umschalteinrichtung 4 kann die wesentlichen Betriebselemente 2ᵢ einzeln oder gemeinsam zwischen den Betriebszuständen A, B und C umschalten. In einer Abwandlung der Ausgestaltung ist jedem wesentlichen Betriebselement 2ᵢ eine eigene Umschalteinrichtung 4 bzw. je eine Umschalteinrichtung 4 über eine Wirkverbindung 13 mit dem jeweiligen wesentlichen Betriebselement 2ᵢ verbunden. Die Umschalteinrichtung 4 kann sowohl ein eigenständiges Gerät im Fahrzeug 1, als auch in ein wesentliches oder mehrere wesentliche Betriebselemente 2 integrierte Schaltung oder eine in eine zentrale Prozessoreinheit des Fahrzeugs 1 integrierte Schaltung sein.

Die Umschalteinrichtung 4 oder in alternativer Ausgestaltung mehrere Umschalteinrichtungen 4 sind über Wirkverbindungen 6 mit Mitteln zur Erkennung von Ereignissen 20ᵢ verbunden, die an verschiedenen Stellen des Fahrzeugs 1 angeordnet sein können.

Die Mittel zur Erkennung von Umschaltereignissen 20ᵢ dienen dazu, der Umschalteinrichtung 4 bestimmte Ereignisse mitzuteilen, die wiederum die Umschalteinrichtung 4 veranlassen, ein wesentliches Betriebselement 2ᵢ zu sperren.

Die folgenden Ereignisse können zum Auslösen der Umschaltung wesentliches Betriebselement 2ᵢ in den Betriebszustand B durch die Umschalteinrichtung 4 führen:
- Wartungsintervall des Fahrzeuges 1 ist abgelaufen
- Wechseln des Kennzeichens
- Überdeckung des Kennzeichens
- Manipulation am Fahrzeug
- Wiederkehr der Spannung nach Ausbau der Batterie bzw. Abklemmen der Lichtmaschine
- Bestimmte Anzahl von Tankfüllungen
- Gefahrene Kilometeranzahl
- Bestimmte Anzahl der Betätigung einer Öffnung des Fahrzeugs (Kofferraum, Tür, Motorhaube, Tankdeckel)
- Drücken eines Betätigungsschalters im Innenraum
- Eindringen in den Innenraum bei abgeschlossenem Fahrzeug
- Anheben des Fahrzeugs
- Entfernen einer Sicherungsmutter am Rad
- Entfernen von Felgen oder Bremsscheiben
- Öffnen von Deckeln für das Nachfüllen von Motoröl bei Kühlwasser, Getriebeöl
- Öffnen der Ablassschrauben für Motoröl, Getriebeöl
- Abklemmen einzelner Steuergeräte oder Abklemmen von Sensoren, die zum Erkennen der Ereignisse genutzt werden
- Anschluss an Diagnosemittel bzw. Benutzung eines Diagnoseterminals und Auslesen über eine Datenleitung des Fahrzeugs (CAN, MOST usw.)
- Längere Stillstandszeit des Fahrzeugs
- Rufen eines bestimmten Worts, das mittels einer Spracherkennung erkannt wird
- Austausch von Leuchtmitteln für die Fahrzeugbeleuchtung
- Abnahme des Deckels der Motorhaube, der den Zugang zu Zündkerzen, Motorsteuergerät und Zylinderkopfdichtung erlaubt.
- Manipulation am Anlasser

Die Ereignisse können sowohl einzeln als auch in Kombination zum Auslösen der Umschaltung durch die Umschalteinrichtung 4 führen.

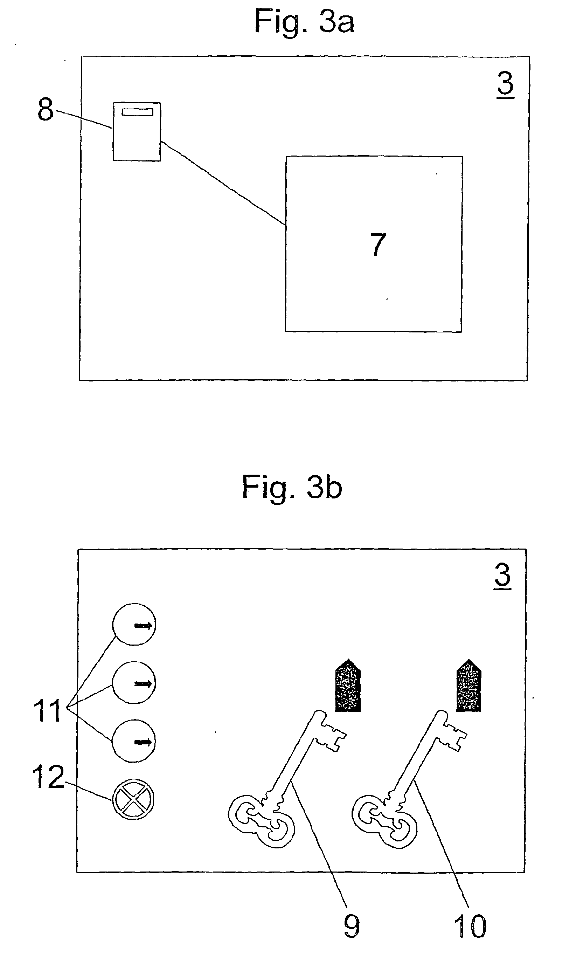

Weiterhin ist die Umschalteinrichtung 4 über Mittel zur Übertragung von Berechtigungsinformationen mit einer Nutzungsberechtigungseinrichtung 3 verbunden. Diese Nutzungsberechtigungseinrichtung 3 ist zur Erhöhung der Sicherheit in der vorliegenden Ausführungsform außerhalb des Fahrzeugs, vorzugsweise im Wohnhaus oder der Garage des Fahrzeughalters, angeordnet und dient zur Abfrage der Berechtigung des Fahrzeughalters zum Fahren des jeweiligen Fahrzeugs. Die Nutzungsberechtigungseinrichtung 3 wird bei der Beschreibung der Figur 3 weiter unten näher beschrieben.

Um nun die von der Nutzungsberechtigungseinrichtung 3 erhaltene Berechtigungsinformation an das Fahrzeug 1 bzw. an die Umschalteinrichtung 4 zu übermitteln, werden als Mittel zur Übertragung der Berechtigungsinformation 5 beispielsweise eine Funkverbindung, eine Infrarotverbindung oder eine ganz normale Steckerverbindung verwendet. Es ist weiterhin möglich, die von der Nutzungsberechtigungseinrichtung 3 stammende Information in dem Fahrzeugschlüssel des Fahrzeugs 1 zu speichern und diese Information zur einmaligen Freischaltung und nach Verifizieren der Information im Fahrzeug 1 einzulesen. Das Einlesen kann beispielsweise über das Zündschloss des Fahrzeugs oder über eine selbständige Einrichtung erfolgen. Nach Einlesen der Berechtigungsinformation und Verifizierung derselben wird die Berechtigungsinformation automatisch auf dem Schlüssel gelöscht. Um eine Fälschung der Berechtigungsinformation auszuschließen, findet bei dem Fahrzeug vor der ersten Inbetriebnahme eine Individualisierung bzw. Personalisierung des Fahrzeugs 1, der wesentlichen Betriebselemente 2ᵢ und der dazugehörigen Nutzungsberechtigungseinrichtung 3 statt. Die von der Nutzungsberechtigungs-Einrichtung übermittelte Berechtigungsinformation des Fahrers wird über einen Algorithmus jedes Mal wieder verändert. Ein Dieb kann also, falls er sich einmal die Berechtigungsinformation beschafft hat - sei es durch "car-napping" oder durch Diebstahl des die Berechtigungsinformation enthaltenden Schlüssels - jeweils nur einmal die Berechtigung zum Fahren des Fahrzeugs erlangen. Sobald jedoch ein Umschaltereignis eintritt, kann der Dieb nur noch eine begrenzte Zeit mit dem Fahrzeug fahren. Danach muss die Freischaltung des Fahrzeugs, bei dem sich ein wesentliches Betriebselement 2ᵢ in dem Betriebszustand C befindet, durch das Werk oder eine Zertifizierungsstelle, beispielsweise der ADAC, erfolgen.

Eine weitere Wirkungsweise der Nutzungsberechtigungseinrichtung 3 in einer alternativen Variante funktioniert so, dass der Schlüssel beim Starten automatisch die Nutzungsberechtigungseinrichtung 3 kontaktiert, beispielsweise über eine Internetverbindung des Fahrzeugs oder über eine sonstige Übertragungsverbindung - wie oben beschrieben. Bei dieser Ausgestaltung kann das die Umschaltung auslösendes Ereignis beispielsweise eine Manipulation an der e-mail-/Internetanbindung des Fahrzeugs sein. Eine weitere Möglichkeit besteht darin, als Ereignis die Manipulation an der Antenne oder der über einen bestimmten Zeitraum andauernde Ausfall der Antenne oder die Blockade der Antenne sein. Zur Umgehung dieser Sicherheitslücke kann als Antenne auch die Karosserie oder Teile der Karosserie genutzt werden.

Die nicht beanspruchte Vorrichtung kann natürlich auch mit jeder anderen Sicherheitseinrichtung wie beispielsweise einer Wegfahrsperre kombiniert werden. Weiterhin ist die Kombination mit einer GPS-Einrichtung möglich, über welche eine Fern-Immobilisierung des Fahrzeugs von der Nutzungsberechtigungseinrichtung 3 aus verfügt werden kann oder eine Umschaltung des Betriebszustands erfolgen kann. Zur weiteren Erhöhung der Sicherheit ist es in einer Ausgestaltung der Erfindung möglich, dass das Fahrzeug, wenn sich ein wesentliches Betriebselement 2ᵢ in dem Betriebszustand B befindet, ständig oder in bestimmten Zeitabständen die Fahrzeugposition über GPS und Mobiltelefon- bzw. Internetanbindung an die Nutzungsberechtigungseinrichtung 3 sendet oder an einen Zentralcomputer beim Werk oder bei einer Zertifizierungsstelle, beispielsweise ADAC. Des weiteren könnte zur Lokalisierung des Fahrzeugs das derzeit von der Bundesregierung installierte Lkw-Maut-Erfassungssystem benutzt werden.

Als Mittel zur Übertragung der Berechtigungsinformation 5 von der Nutzungsberechtigungseinrichtung 3 an das Fahrzeug 1 bzw. die Umschalteinrichtung 4 kann auch eine automatische Wirkverbindung bei der Einfahrt des Fahrzeugs in die Garage bzw. einen Carport oder Stellplatz über Funk-, Kontakt- oder Infrarotverbindung oder eine optische Verbindung hergestellt werden.

Weiterhin ist es als alternative Ausführungsform möglich, die Nutzungsberechtigungseinrichtung 3 im Fahrzeug zu integrieren. Eine Berechtigungsinformation wird erst dann an das Fahrzeug 1 übermittelt, wenn beispielsweise eine Legitimation über die verschiedenen Schlüssel (9,10) und den Fahrzeugschlüssel erfolgt.

Auf diese Art und Weise ist es in einer Ausführungsform auch möglich, diese so auszugestalten, dass in dem Fall, dass ein wesentliches Betriebselement 2ᵢ des Fahrzeugs in dem Betriebszustand C ist, eine Rückschaltung des wesentlichen Betriebselements 2ᵢ des Fahrzeugs mittels aller vier Schlüssel in den Betriebszustand A erfolgt.

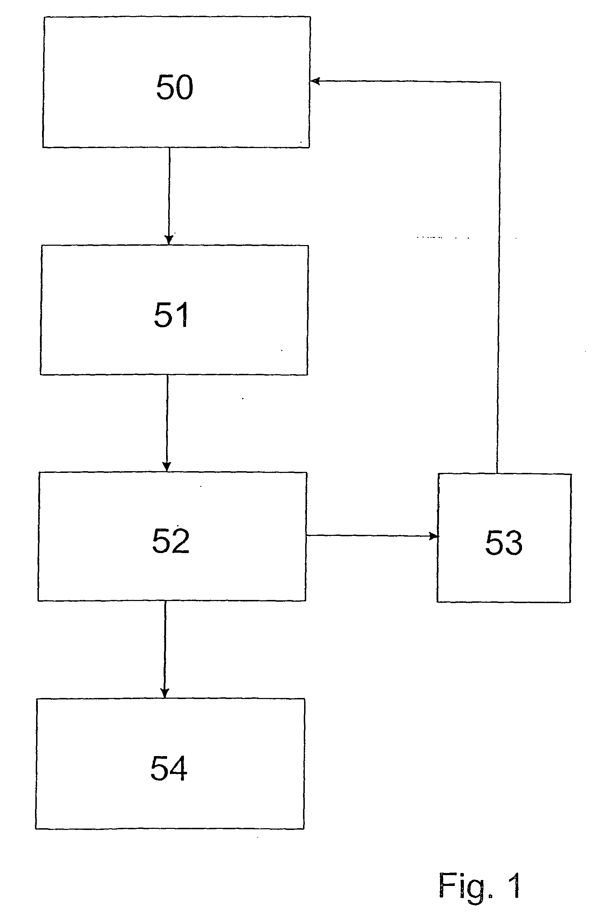

In Figur 1 ist schematisch ein Verfahren dargestellt, bei dem sich in Verfahrensschritt 50 das Fahrzeug zunächst in einem betriebsbereiten Zustand befindet, in dem alle wesentlichen Betriebselemente 2ᵢ durch eine externe, von dem Fahrzeug unabhängige Nutzungsberechtigungseinrichtung 3 über Mittel zur Übertragung der Berechtigungsinformation 5 in einen im Wesentlichen uneingeschränkten, betriebsbereiten Betriebszustand A geschaltet werden. Dieser Zustand stellt den Normalzustand dar, bei welchem der Fahrzeughalter das Fahrzeug normal betreiben kann. Das Fahrzeug wird ab Werk in diesen Betriebszustand versetzt und kann in einer speziellen Ausführungsform der Erfindung, die oben beschrieben wurde, individualisiert werden.

Tritt nun eines oder mehrere vordefinierte Ereignisse ein, die ebenfalls oben beschrieben wurden - in Figur 1 mit Bezugszeichen 51 gekennzeichnet - so wird mindestens ein wesentliches Betriebselement 2ᵢ von einer Umschalteinrichtung 4 in einen für eine bestimmte Zeitdauer betriebsbereiten Betriebszustand B (Bezugszeichen 52) geschalten, wobei die Zeitdauer von vordefinierten Betriebsparametern abhängig ist. Als solche Betriebsparameter können beispielsweise wiederum die gefahrenen Kilometer bzw. Tankdeckelöffnung oder andere o.g. Betriebsparameter als Zähler verwendet werden.

Die Umschalteinrichtung 4 kann in einer Alternativlösung gemäß der vorliegenden Erfindung auch in eines oder mehrere wesentliche Betriebselemente 2ᵢ integriert sein, wobei hierdurch der Zugriff durch den Dieb weiter erschwert wird.

Während dieser Zeitdauer, in der sich das wesentliche Betriebselement 2ᵢ in dem betriebsbereiten Zustand B befindet, muss - um das Fahrzeug weiter betriebsfähig zu halten - ein Umschaltsignal von der Nutzungsberechtigungseinrichtung 3 an die Umschalteinrichtung 4 gesendet werden, indem das Fahrzeug beispielsweise in die Garage gefahren wird und die Verbindung mit der Nutzungsberechtigungseinrichtung 3 aufnimmt (Bezugszeichen 53). Die Berechtigungsinformation kann auch über beliebige weitere Mittel zur Übertragung der Berechtigungsinformation 5 - wie oben beschrieben - an die Umschalteinrichtung bzw. das/die wesentliche(s) Betriebselement(e) 2ᵢ gesendet werden.

Falls dies nicht innerhalb der Zeitdauer geschieht, wird das wesentliche Betriebselement 2ᵢ, das sich vorher in dem Betriebszustand B befand, in den Betriebszustand C umgeschaltet, wodurch das Fahrzeug zum Stillstand kommt und nicht mehr betriebsbereit ist (Bezugszeichen 54). In diesem Zustand ist das Fahrzeug entweder vom Werk oder von einer bestimmten Zertifizierungsstelle nach eingehender Prüfung der Berechtigung des Fahrzeughalters oder über alle vier Schlüssel des Fahrzeughalters in den Betriebszustand A umschaltbar. Es ist somit ein Verfahren geschaffen worden, wodurch ein Diebstahl des mit einem solchen Verfahren und einer solchen Vorrichtung ausgestatteten Fahrzeugs nicht mehr rentabel ist, da das Fahrzeug nur über eine bestimmte kurze Strecke gefahren werden kann beziehungsweise beim nächsten Anlassversuch gesperrt wird. Da nach einem Diebstahl die Fahrzeuge in überwiegender Anzahl in das Ausland verbracht werden, gelingt dies den Dieben bei Fahrzeugen, die mit einer solchen Vorrichtung und einem solchen Verfahren ausgestattet sind, nicht mehr.

In Figur 3a ist eine Nutzungsberechtigungseinrichtung 3 in einer ersten Ausführungsform dargestellt. Diese beinhaltet einen Computer 7, der über eine Chipkarte 8 die Berechtigung des Nutzers erfährt. Am Computer 7 kann dann die jeweilige Einstellung der gewünschten Parameter übersichtlich erfolgen. Sobald die Einstellung beendet ist, überträgt der Computer 7 über die Mittel zur Übertragung der Berechtigungsinformation 5 die Parameter an die Umschalteinrichtung 4, die die Parameter umsetzt.

Beispielsweise gibt der über die Chipkarte 8 berechtigte Nutzer an dem Computer eine Zeitdauer für die Nutzung des Fahrzeugs 1 von einer Woche vor. Dieser Parameter wird dann gegebenenfalls über eine verschlüsselte Verbindung über die Mittel zur Übertragung der Berechtigungsinformation 5 an die Umschalteinrichtung 4 übertragen. Diese gibt dann nach Eintritt des Umschaltereignisses, das von dem Mittel zur Erkennung eines Umschaltereignisses 20ᵢ über die Wirkverbindung 6 übermittelt wurde, das wesentliche Betriebselement 2ᵢ (beispielsweise Steuergerät) für eine Woche frei.

Der Computer 7 kann die Parameter in einer anderen Ausführungsform, beispielsweise auf einer sicheren SQL-Datenbank, abspeichern. Die Umschalteinrichtung 4 im Fahrzeug 1 wiederum holt sich der von der SQL-Datenbank die dort gespeicherten Parameter und gibt das wesentliche Betriebselement 2ᵢ entsprechend frei. In diesem Fall stellt die Speicherung im Internet und das Abrufen durch die Umschalteinrichtung 4 die Mittel zur Übertragung der Berechtigungsinformation 5 dar. Es ist auch denkbar, dass der Computer 7 ein x-beliebiger Computer mit Internet-Anschluss ist, der beispielsweise auf die Homepage des Fahrzeugherstellers zugreift und der Nutzer identifiziert sich entweder über einen Nutzernamen und ein Passwort oder-eine Chipkarte und kann im Anschluss daran direkt online Einstellungen vornehmen. Die Sperreinrichtung holt dann zu bestimmten Zeitpunkten, beispielsweise wenn das Fahrzeug gestartet wird, die Daten von der Datenbank auf dem sicheren Server.

In Figur 3b ist als Nutzungsberechtigungseinrichtung 3 eine Schaltvorrichtung vorgesehen, die je ein Schloss für einen Ersatzschlüssel 9 und einen Werkstattschlüssel 10 enthalten kann, der als Berechtigungsnachweis dient. Über Schalter 11 kann der berechtigte Nutzer die o.g. Einstellungen an den Parametern vornehmen. Ein Betätigungsknopf 12 veranlasst die Übertragung der Betriebsparameter über die Mittel zur Übertragung der Berechtigungsinformation 5 zu der Umschalteinrichtung 4 in dem Fahrzeug 1. Die Freigabe der Sperrung kann bereits durch einen der Schlüssel aktiviert werden. Eine weitere Erhöhung der Sicherheit ergibt sich, indem der zweite oder ein weiterer Schlüssel, der sonst keine Funktion innehat, zur Freigabe benötigt wird. Dieser weitere Schlüssel kann wiederum ein dem Fachmann bekannter Ersatz für einen Schlüssel sein.

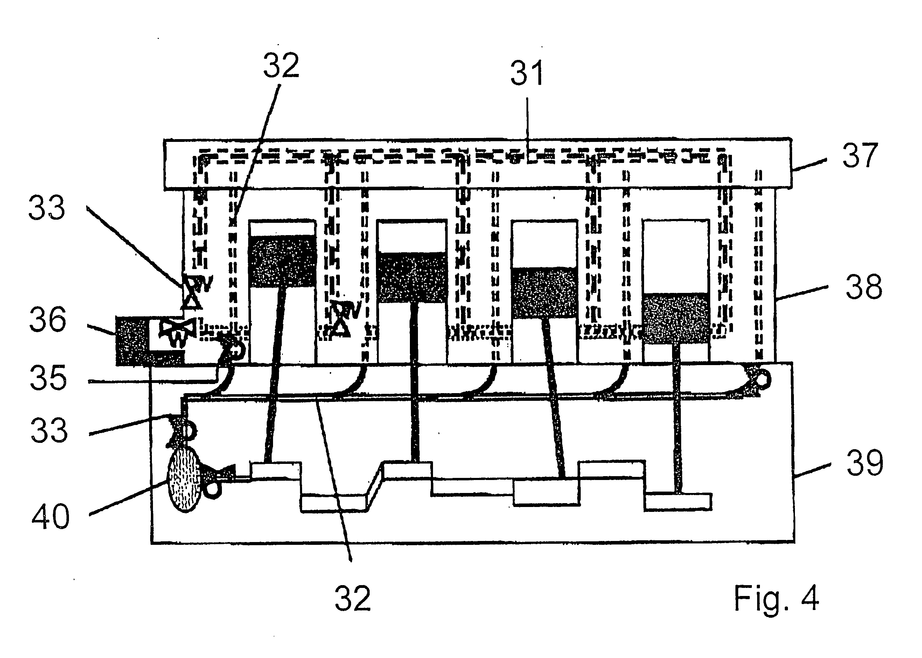

In Figur 4 ist ein Motorblock 38 mit einem Zylinderkopf 37 und einer Ölwanne 39 gezeigt. Des weiteren beinhaltet der schematisch dargestellte Motor eine Wasserpumpe 36 und eine Ölpumpe 40. Die Ölpumpe 40 sorgt für die Zirkulation des Öls in der Ölleitung 32, was der Schmierung der beweglichen Teile und der Wärmeabfuhr dient. Zur Kühlung des in der Ölleitung strömenden Öles, das sich beim Betrieb des Motors erhitzt, dient das in der Wasserleitung 31 zirkulierende Wasser.

Zur Sperrung des Wasserkreislaufes in der Wasserleitung 31 dient ein Sperrventil 33. Ein im wesentlichen baugleiches Sperrventil 33 dient zur Sperrung des Ölkreislaufes in der Ölleitung 32. Nach Sperrung des Sperrventils 33 ist der Motor und somit das Fahrzeug noch einige Zeit einsetzbar, bevor der Motor überhitzt. Zur Sicherheit kann in der Instrumentenanzeige eine Warnlampe angezeigt werden, so dass der Fahrer die Störung frühzeitig bemerkt.

Das Sperrventil 33 ist über eine Wirkverbindung 35 mit einem der wesentlichen Betriebselemente 2ᵢ verbunden, wobei das wesentlichen Betriebselement 2ᵢ auch der Motor selbst sein kann. Vorzugsweise ist das wesentliche Betriebselement 2ᵢ in diesem Fall das Motorsteuergerät, das den Code des Sperrventils 33 abfragt. Ab diesem Zeitpunkt akzeptiert das Sperrventil 33 nur noch Befehle von diesem Motorsteuergerät, die mit dem richtigen Code übermittelt werden. Ist der Code richtig, so kann das Sperrventil geschalten werden, um beispielsweise das Ventil zu öffnen und die Zirkulation des Wassers im Wasserkreislauf zuzulassen.

Alternativ kann natürlich auch die Benzinleitung durch ein Sperrventil gesperrt werden.

Die erfindungsgemäße Vorrichtung zur Sicherung des Fahrzeugs 1 gegen Diebstahl kann auch auf einer individuellen Codierung für jedes Fahrzeug basieren. Die Codes der Steuergeräte und der Fahrzeugschlüssel sind individuell und weder löschbar noch überschreibbar eingeprägt. Wichtige Funktionen werden teilweise von den Steuergeräten in den Schlüssel ausgelagert, so dass die Funktionsfähigkeit des Fahrzeugs 1 nur mit dem Originalschlüssel gegeben ist (Umgehungssicherheit). Die Steuergeräte funktionieren nur innerhalb der jeweils vom Benutzer freigegebenen Betriebsparameter. Um die Betriebsparameter freizugeben, muss der berechtigte Benutzer des Fahrzeugs beispielsweise alle drei Fahrzeugschlüssel an dafür vorgesehenen Adaptern einstecken. Anschließend kann er beispielsweise als Parameter ein Zeitintervall wählen, innerhalb dessen das Fahrzeug nach Betätigung des Knopfs 12 funktionsfähig ist. Zusätzlich kann das Fahrzeug noch über eine Wegfahrsperre gesichert sein. Ein Dieb muss folglich sowohl die Wegfahrsperre als auch die Umschalteinrichtung 4, die bestimmte Parameter unlöschbar gespeichert hat. überwinden. Dies ist selbst für den Fall des car-nappings nur solange möglich, bis die vorgegebenen Parameter abgelaufen sind. Sobald einer der Parameter erfüllt ist, kann der unbefugte Benutzer, selbst wenn er im Besitz des Schlüssels ist und die Wegfahrsperre überwunden hat, das Fahrzeug nicht mehr weiter benutzen, da die Umschalteinrichtung 4 das wesentliche Betriebselement 2ᵢ in den Betriebszustand B umschaltet.

In einer noch sichereren Ausführungsform der vorliegenden Erfindung ist vorgesehen, dass mehrere wesentliche Betriebselemente 2ᵢ (beispielsweise alle Steuergeräte verschiedener betriebswesentlicher Geräte) von der Umschalteinrichtung 4 gesperrt werden, bis der von der Nutzungsberechtigungseinrichtung 3 über die Mittel zur Übertragung der Berechtigungsinformation 5 übermittelte Code von allen Steuergeräten verifiziert worden ist. Der übermittelte Code kann ein vom Nutzer individualisierter Code sein, der in den Schlüsseln eingeprägt ist. Damit ist es nicht mehr möglich, durch Austausch eines oder nur weniger Steuergeräte das Fahrzeug in Betrieb zu setzen.

Um nun den Einsatz von Seriensteuergeräten in den Fahrzeugen weiterhin zu ermöglichen, erhält das Fahrzeug 1, wenn es vom Werk geht, eine Werkcodenummer, mit deren Hilfe das Fahrzeug für einen kurzen Zeitraum betriebsbereit geschaltet wird. Hiermit kann das Fahrzeug im Werk vom Band gefahren werden. Bei Auslieferung an den Händler wird diese Werkcodenummer mitgeliefert, um z.B. Probefahrten vornehmen zu können. Weiterhin wird ein versiegelter Codeschlüssel mitgeliefert. Bei der Übergabe an den Kunden wird dann das Siegel geöffnet und der Codeschlüssel entnommen. Der Kunde muss nun an der Nutzungsberechtigungseinrichtung 3 alle Schlüssel einstecken (Schlüssel, Ersatzschlüssel, Werkstattschlüssel und Codeschlüssel) und einen weiteren Code (Initialcode) eintippen (1x-ig) und eine Taste betätigen (z.B. Individualisieren). Dadurch wird ein Prozess in Gang gesetzt, der in alle Schlüssel und in alle wesentlichen Betriebselemente 2ᵢ eine neue Codenummer einschreibt. Damit sind die wesentlichen Betriebselemente 2ᵢ (beispielsweise Steuergeräte) individualisiert. Diese Codenummer kann aus einem Basiscode erzeugt werden, der in den Schlüsseln eingeprägt ist. Bei jeder weiteren Fahrzeugfreischaltung mit bestimmten Parametern müssen dann nur noch die jeweiligen Schlüssel eingesteckt werden.

Um aber eine Umgehung der Sperre durch Auslesen der Codenummer zu vermeiden, kann bei jedem neuen Freischaltvorgang die Codenummer nach einen Algorithmus modifiziert werden. Damit die Steuergeräte die neue Codenummer akzeptieren, muss die alte Codenummer von den Schlüsseln abgefragt werden. Die Schlüssel prüfen ihrerseits, ob die Steuergeräte die alte Codenummer haben. Erst wenn dies alles übereinstimmt, akzeptieren die Steuergeräte die neue Codenummer, die von den Schlüsseln kommt.

Wird nun z.B. der Austausch eines (oder weniger) Steuergeräte (z.B. wegen Unfall) nötig, so muss-der Kunde erneut den obigen Vorgang der individualisierung durchführen. Die neuen Steuergeräte werden hierauf auf den Code der alten Steuergeräte individualisiert. Dies ist beispielsweise aber nur dann möglich, wenn eine geringe Anzahl von Steuergeräten ausgetauscht wurde. Diese Anzahl ist im Sicherheitssystem festgelegt. Dadurch wird verhindert, dass ein Dieb durch den Austausch nur eines oder nur weniger Steuergeräte die Sicherheitsvorkehrungen umgehen kann. Ist der gleichzeitige Austausch einer größeren Anzahl von Steuergeräten erforderlich, so ist die Mitwirkung des Werks notwendig. In diesem Fall wäre die Anzahl größer als im Sicherheitssystem vorgesehen. Dadurch wird beispielsweise einerseits der gleichzeitige Austausch einer begrenzten Anzahl defekter Steuergeräte ermöglicht und andererseits eine Umgehung der Wegfahrsperre durch den Austausch von nur einem oder einigen Steuergeräten vermieden.

Selbst wenn der unberechtigte Nutzer einen Schüsselsatz eines solchen Fahrzeugs besitzt und alle Steuergeräte austauschen würde, so müsste zunächst die Individualisierung mittels des Schlüsselsatzes erfolgen. Will der unberechtigte Nutzer das Fahrzeug dann verkaufen, so müsste er dem Bewerber auch den Schlüsselsatz geben, da dieser sonst nur eine begrenzte Zeit fahren könnte. Daraufhin würde das Fahrzeug, zu dem der Schlüsselsatz tatsächlich gehört, nicht mehr mit diesem betrieben werden können. Würde er vom Werk einen neuen Schlüsselsatz anfordern, könnte das Werk beispielsweise am Schlüsselsatz im Zusammenhang mit der Fahrgestellnummer des Fahrzeugs prüfen, ob der Schlüsselsatz und das Fahrzeug tatsächlich zusammen gehören.

Falls der Kunde tatsächlich bei der Abholung des Fahrzeugs die Individualisierung nicht durchführen will, folglich mit der Werkcodenummer vom Hof fährt, so hat er das Problem, dass er immer nur kurze Intervalle freigeben kann und immer wieder die z.B. 10-stellige Werkcodenummer eingeben muss. Falls als Parameter eine bestimmte Nutzungsdauer oder eine bestimmte Nutzungsanzahl vorgegeben ist, so würde das Fahrzeug irgendwann nicht mehr betrieben werden können. Erst mit Abschluss des Individualisierungsvorgangs wird das Fahrzeug wieder betriebsbereit. Dadurch wird früher oder später die Individualisierung und damit die Aktivierung des Sicherheitssystems erzwungen. Auf diese Art und Weise wird auch für Fahrzeughändler die Sicherheit bei Herausgabe eines Fahrzeugs zur Probefahrt erhöht, da der Probefahrer nur den einen Schlüssel zum Betrieb des Fahrzeugs erhält.

Mittel zur Übertragung der Berechtigungsinformation von der Nutzungsberechtigungseinrichtung 3 zur Umschalteinrichtung 4 über größere Entfernungen, die bereits oben beschrieben wurden, haben die folgende Wirkungsweise:

Der berechtigte Fahrzeughalter ruft die Nutzungsberechtigungseinrichtung an und identifiziert sich mit einer PIN-Nummer. Dann erfolgt über weitere Eingaben eine neue Freischaltung eines Betriebsintervalls. Die Nutzungsberechtigungseinrichtung übermittelt nun eine nur für einmaligen Gebrauch gültige mehrstellige Nummer, die der Benutzer in eine Eingabeeinrichtung eines Adapters eingibt. Der im Adapter eingesteckte Schlüssel wird mit der Information versehen und kann so im Fahrzeug die neue Freischaltung - Umschaltung in den Betriebszustand A - bewirken.

Eine weitere Wirkungsweise ist die folgende:

Der Benutzer ruft über sein Mobiltelefon die Nutzungsberechtigungseinrichtung an, die das Mobiltelefon an Hand der Rufnummer erkennt. Der Benutzer wird zur Eingabe seiner PIN aufgefordert. Die NBE sendet eine SMS an das Mobiltelefon, die den Code für die Umschaltung des Betriebszustandes enthält. Der Adapter empfängt diesen Code über einen Kommunikationsanschluss, beispielsweise USB, IR oder Bluetooth, und kann somit wie oben die Freischaltung bewirken. Auch ist es denkbar, dass die obigen Geräte zu einem Gerät, beispielsweise einem Autoschlüssel mit integriertem Mobiltelefon verschmolzen werden.

### Weitere Wirkungsweise:

Der berechtigte Fahrzeughalter kontaktiert die NBE über verschlüsselte E-Mail. Die NBE sendet die Umschaltinformation ebenfalls verschlüsselt an den Adapter zurück. Dort wird sie entschlüsselt und an die Umschalteinrichtung 4 übertragen.

In ähnlicher Form ist dies über einen Internetanschluss zu bewerkstelligen, der eine Verbindung mit der NBE herstellt. Über die Eingabe einer PIN und entsprechende Formulare oder Dialoge kann er die Freischaltung bewirken und dabei evtl. sogar noch die Parameter anpassen.

### BEZUGSZEICHENLISTE

- 1:: Fahrzeug
- 2ᵢ:: wesentliche Betriebselemente
- 3:: Nutzungsberechtigungseinrichtung
- 4:: Umschalteinrichtung
- 5:: Mittel zur Übertragung der Berechtigungsinformation
- 6:: Wirkverbindung
- 7:: Computer
- 8:: Chipkartenlesegerät
- 9:: Ersatzschlüssel
- 10:: Werkstattschlüssel
- 11:: Schalter
- 12:: Betätigungsknopf
- 13:: Wirkverbindung
- 20ᵢ:: Mittel zur Erkennung eines Umschaltereignisses
- 31, 32:: Flüssigkeitsleitung
- 33:: Sperrventil
- 34:: wesentliches Betriebsaggregat
- 35:: Wirkverbindung
- 36:: Wasserpumpe
- 37:: Zylinderkopf
- 38:: Motorblock
- 39:: Ölwanne
- 40:: Ölpumpe
- 50:: Betriebszustand A
- 51:: Umstellungsereignis
- 52:: Umschaltung in Betriebszustand B
- 53:: Berechtigungsinformation wird von der Nutzungsberechtigungseinrichtung an die Umschalteinrichtung übertragen, Umschaltung in den Betriebszustand A
- 54:: Wesentliches Betriebselement wird in den Betriebszustand C geschalten

## Patentansprüche

1. Verfahren zur Sicherung eines Fahrzeuges gegen Diebstahl, wobei mindestens ein wesentliches Betriebselement des Fahrzeuges zwischen drei Betriebszuständen A, B und C schaltbar ist und gemäß den folgenden Schritten zwischen diesen Betriebszuständen geschalten wird:
a. Die wesentlichen Betriebselemente werden durch eine externe, von dem Fahrzeug unabhängige Nutzungsberechtigungseinrichtung über Mittel zur Übertragung der Berechtigungsinformation in einen im wesentlichen uneingeschränkt betriebsbereiten Betriebszustand A geschalten;
b. Mindestens ein wesentliches Betriebselement wird von einer ereignisabhängigen Schaltung durch mindestens ein Ereignis in einen für eine Zeitdauer betriebsbereiten Betriebszustand B geschaltet, wobei die Zeitdauer von vordefinierten Betriebsparametern abhängig ist;
c. Entweder wird mindestens ein wesentliches Betriebselement des Fahrzeuges nach Ablauf der Zeitdauer zum Außer-Betrieb-Setzen des Fahrzeuges in einen nicht betriebsbereiten oder eingeschränkt betriebsbereiten Betriebszustand C geschaltet oder die wesentlichen Betriebselemente werden vor Ablauf der Zeitdauer mittels der Nutzungsberechtigungseinrichtung über Mittel zur Übertragung der Berechtigungsinformation in den betriebsbereiten Betriebszustand A gemäß Verfahrensschritt a) geschalten;
**dadurch gekennzeichnet, dass** als Mittel zur Übertragung der . Berechtigungsinformation von der Nutzungsberechtigungseinrichtung ein Fahrzeugschlüssel verwendet wird, durch den die Berechtigungsinformation, vorzugsweise verschlüsselt, zu einer Umschalteinrichtung übertragen wird, die im Falle der Berechtigung das wesentliche Betriebselement des Fahrzeuges in den Betriebszustand A umschaltet und dass anschließend die Berechtigungsinformation aus dem Fahrzeugschlüssel gelöscht wird.

2. Verfahren nach einem der vorhergehenden Ansprüche, **dadurch gekennzeichnet, dass** bei falscher Berechtigungsinformation mindestens ein wesentliches Betriebselement in den Betriebszustand C umgeschalten wird und/oder dass das/die wesentliche(n) Betriebselement(e) nach Ablauf der Zeitdauer selbständig in den Betriebszustand C geschalten werden und/oder die Zeitdauer auf ein Maximum beschränkt wird, indem ein Zähler für die Zeitdauer eine maximale Stellenzahl aufweist.

3. Verfahren nach einem der vorhergehenden Ansprüche, **dadurch gekennzeichnet, dass** sowohl das Fahrzeug als auch die Nutzungsberechtigungseinrichtung vor der ersten Inbetriebnahme durch einen Berechtigungscode einmalig individualisiert werden und/oder die Betriebsparameter an der Nutzungsberechtigungseinrichtung eingestellt werden und/oder die Ereignisse, die die Umschaltung des Betriebszustandes des wesentlichen Betriebselementes des Fahrzeuges auslösen, an der Nutzungsberechtigungseinrichtung ausgewählt werden.

4. Verfahren nach einem der vorhergehenden Ansprüche, **dadurch gekennzeichnet, dass** die vordefinierten Betriebsparameter eine Kilometerentfernung umfassen.

## Claims

1. A method for securing a car from theft, wherein at least one essential operating element of the vehicle may be switched between three operating conditions A, B and C, and is switched between these operating conditions according to the following steps:
a the essential operating elements are switched by way of an external use authorisation device independent of the vehicle, via means for transmitting authorisation information, into an operationally ready operating condition A which is essentially unrestricted;
b at least one essential operating element is switched by an event-dependent switch by way of at least one event, into an operating condition B which is operationally ready for a time duration, wherein the time duration is dependent on predefined operating parameters;
c either at least one essential operating element of the vehicle after the completion of the time duration, for setting the vehicle out of operation, is switched into a non-operationally-ready or restricted-operationally-ready operating condition C, or the essential operating elements, before completion of the time duration, are switched by way of the use authorisation device via means for transmitting the authorisation information, into the operationally ready operating condition A according to method step a)
**characterised in that** a vehicle key is used as means for the transmission of the authorisation information from the use authorisation device, by way of which key the authorisation information, preferably in an encoded manner, is transmitted to a switch-over device, which in the case of authorisation, switches over the essential operating element of the vehicle into the operating condition A, and that subsequently the authorisation information is deleted from the vehicle key.

2. A method according to one of the preceding claims, **characterised in that** with incorrect authorisation information, at least one essential operating element is switched over into the operating condition C and/or that the essential operating element/elements after completion of the time duration, are automatically switched into the operating condition C, and/or the time period is limited to a maximum, **in that** a counter for the time duration has a maximum digit number.

3. A method according to one of the preceding claims, **characterised in that** the vehicle as well as the use authorisation device, before the first operational start, are individualised as a one-off event by way of an authorisation code, and/or the operating parameters are set at the use authorisation device and/or the events which trigger the switching-over of the operating condition of the essential operating element of the vehicle, are selected at the use authorisation device.

4. A method according to one of the preceding claims, **characterised in that** the predefined operating parameters include a kilometre distance.

## Revendications

1. Procédé pour sécuriser un véhicule contre le vol, au moins un élément de service essentiel du véhicule pouvant être commuté entre trois états de service A, B et C et étant commuté selon les étapes suivantes entre ces états de service :
a. Les éléments de service essentiels sont commutés par un dispositif d'autorisation d'utilisation externe indépendant du véhicule par l'intermédiaire de moyens pour la transmission de l'information d'autorisation dans un état de service A sensiblement opérationnel sans réserve ;
b. au moins un élément de service essentiel est créé par un circuit dépendant de l'événement par au moins un événement dans un état de service B opérationnel pour une durée, la durée étant dépendante de paramètres de service prédéfinis ;
c. ou bien au moins un élément de service essentiel du véhicule est commuté après l'expiration de la durée pour la mise hors service du véhicule dans un état de service C non opérationnel ou opérationnel sous réserve ou bien les éléments de service essentiels sont commutés avant l'expiration de la durée au moyen du dispositif d'autorisation d'utilisation par des moyens pour la transmission de l'information d'autorisation dans l'état de service A opérationnel selon l'étape de procédé a) ;
**caractérisé en ce que**, comme moyen pour la transmission de l'information d'utilisation, le dispositif d'autorisation d'utilisation utilise une clé de véhicule par laquelle l'information d'autorisation, de préférence codée, est transmise à un dispositif de commutation qui, dans le cas de l'autorisation, commute l'élément de service important du véhicule dans l'état de service A et **en ce qu'**ensuite l'information d'autorisation est effacée à partir du corps du véhicule.

2. Procédé selon l'une quelconque des revendications précédentes, **caractérisé en ce que**, dans le cas d'une erreur d'information d'autorisation, au moins un élément de service important est commuté dans l'état de service C et/ou **en ce que** l'élément (les éléments) essentiel(s) est/sont commuté(s) après l'expiration de la durée automatiquement dans l'état de service C et/ou **en ce que** la durée est limitée à un maximum du fait qu'un compteur présente un nombre d'emplacements maximum pour la durée.

3. Procédé selon l'une quelconque des revendications précédentes, **caractérisé en ce qu'**aussi bien le véhicule que le dispositif d'autorisation d'utilisation sont individualisés une fois avant la première mise en service par un code d'autorisation et/ou les paramètres de service sont réglés sur le dispositif d'autorisation d'utilisation et/ou les événements, qui déclenchent la commutation de l'état de service de l'élément de service essentiel du véhicule, sont sélectionnés sur le dispositif d'autorisation d'utilisation.

4. Procédé selon l'une quelconque des revendications précédentes, **caractérisé en ce que** les paramètres de service prédéfinis comprennent une distance en kilomètres.
